# EUROPEAN PATENT APPLICATION

(11) **EP 4 762 931 A1**
(43) Date of publication of application: **24.06.2026**
(21) Application number: 24222116.6
(22) Date of filing: 20.12.2024
(51) Int. Cl.: A22C 11/12

(54) **CLIPPING TOOL ASSEMBLY**

(71) Applicant: Poly-clip System GmbH & Co. KG, 65795 Hattersheim (DE)
(72) Inventor: Wally, Jürgen, 60433 Frankfurt am Main (DE)
(74) Representative: Eisenführ Speiser

(57) **Abstract**

The present invention relates to a clipping tool assembly (200) for closing at least one closure means (C), like a closure clip, in a packaging machine (100), like a clipping machine, for closing tubular or bag-shaped packaging casings (M). The clipping tool assembly (200) comprises a clipping tool unit (220) including at least one first clipping tool (222) and at least one second clipping tool (224), for applying at least one closure means (C) to a tubular or bag-shaped packaging casing (M), by linearly reversibly moving the at least first clipping tool (222) in a closing direction (CD) towards the at least second clipping tool (224), and a support unit (300) having at least a first frame element (310), the first frame element (310) includes a guide arrangement (340) for guiding the at least first closing tool (222) and a closure means (C) to be closed towards the at least second closing tool (224), the guide arrangement (340) forms a guide channel which extends in the closing direction (CD). The clipping tool assembly further comprises a removal unit (400) for removing a closure means (C) or remains thereof from the support unit (300) of the clipping tool assembly (200). The present invention relates to a method for removing a closure means (C) or remains thereof from a clipping tool assembly (200) of a packaging machine (100), like a clipping machine, for closing tubular or bag-shaped packaging casings (M).

## Description

The present invention relates to a clipping tool assembly for closing at least one closure means, like a closure clip, in a packaging machine, like a clipping machine, for closing tubular or bag-shaped packaging casings.

In practice, packaging machines, like clipping machines, are known for producing sausage-shaped products, like sausages, in which filling material is fed into a tubular or bag-shaped packaging casing which is stored on a filling tube, and which is closed at its front end by at least one closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and at least one first closure clip is placed and closed on said plait-like portion by a clipping device, for closing the portion of the tubular or bag-shaped packaging casing just filled. Additionally, at least one second closure clip may be placed for closing the front end of the sausage-shaped product to be produced next. For severing the sausage-shaped product just produced from the remaining supply of a tubular or bag-shaped packaging casing, a cutting device may be provided for cutting off the casing material between the first and second closure clip. The sausage-shaped product just produced may then be discharged from the clipping machine by a discharge device, like a belt conveyor, for further treatment, like cooking or smoking.

Dependent on the kind of products to be produced, closure clips may be used, which are made of metal or of plastic. Due to the high force acting on said closure clips, said closure clips, when made of plastic, may be damaged, caused by material defects, abrasion or the like. In such clipping machines, particularly when processing U-shaped clips, which are fed into a guide channel and pushed by the first clipping tool or punch, towards the second clipping tool or die, said closure means or closure clip may stuck in said guide channel. This leads to incorrect closure or damages of the sausage-shaped products and to production losses and downtimes of the clipping machine.

Thus, it is an object of the present invention to provide closing tool assembly, which enables a reliable operation of a clipping machine and which reduces the risk of production losses.

According to the present invention, there is provided a clipping tool assembly for closing at least one closure means, like a closure clip, in a packaging machine, like a clipping machine, for closing tubular or bag-shaped packaging casings. The clipping tool assembly comprises a clipping tool unit including at least one first clipping tool and at least one second clipping tool, for applying at least one closure means, like a closure clip to a tubular or bag-shaped packaging casing, by linearly reversibly moving the at least first clipping tool in a closing direction towards the at least second clipping tool. The clipping tool assembly comprises a support unit having at least a first frame element, the first frame element includes a guide arrangement for guiding the at least first closing tool and the closure means to be closed towards the at least second closing tool, the guide arrangement forms a guide channel which extends in the closing direction. In the inventive clipping tool arrangement, a removal unit is provided, for removing a closure means or remains thereof from the support unit of the clipping tool assembly.

The removal unit securely removes a closure means, or remains thereof, from the support unit, thereby preventing unexpected downtimes and production losses caused by a closure means or closure clip, or remains thereof, that stuck in the guide channel. Furthermore, disassembling the clipping machine, like demounting a magazine bar or other components of the clipping machine, is not necessary.

In a preferred embodiment, the sliding carriage is linearly reversibly movable in a removal direction, between a working position and a release position. In the working position, the sliding carriage forms a portion of the guide channel, and enables a secure operation of the clipping machine. In the release position, the stuck closure clip or remains thereof may securely be removed from the clipping tool assembly, without damaging a tubular casing to be closed or causing unnecessary downtimes. A linear movement of the sliding carriage may easily be realized with little construction effort.

In a further preferred embodiment of the inventive clipping tool assembly, the removal unit includes a sliding carriage which is configured to form a portion of the guide arrangement of the first frame element, when in the working position. Said sliding carriage enables a secure simple removal of a closure clip stuck in the guide cannel without an increased workload.

In an advantageous configuration, the sliding carriage is reversibly movable in a removal direction perpendicular to the closing direction, between a working position and a release position.

It is further of advantage that the guide channel extends through the at least one frame element and includes at least a first guide portion, a second guide portion and a third guide portion.

In the inventive clipping tool assembly, the sliding carriage has a first end that forms the second guide portion of the guide arrangement. The sliding carriage may thereby securely guide the closure clip during the production process, and may remove a closure clip or remains thereof which stuck in the second guide portion from the clipping tool assembly.

The first frame element of the inventive clipping tool assembly has a first side surface and a second side surface, and comprises a guide recess provided in the first side surface of the first frame element, in which the first end of the sliding carriage is reversibly guided in the removal direction. This design enables a save operation of the removal unit.

Furthermore, in the inventive clipping tool assembly, a discharge opening is provided in the first frame element, which extends from the guide recess to the second side surface of the first frame element, and which coincides with the release position of the sliding carriage. The discharge opening allows a closure clip or remains thereof to be removed from the sliding carriage when moved into the release position.

The removal unit may be actuated in different ways. In one embodiment, the removal unit includes an actuation assembly for manually moving the sliding carriage from the working position into the release position.

For actuating the removal unit, the actuation assembly may include a pusher element for linearly pushing the sliding carriage in the removal direction. However, also other actuation elements may be provided, which e.g. rotate moving the sliding carriage in the removal direction.

In a further embodiment, the removal unit includes an actuation assembly for automatically moving the sliding carriage from the working position into the release position. Such an actuation assembly may include drive means, like a pneumatic or electric drive, that are controlled e.g. by a control unit of the clipping machine.

For securely moving the sliding carriage from the release position back into the working position, the actuation assembly may include an elastic element for automatically moving the sliding carriage into the working position. Thereby, the operational safety of the clipping tool assembly is increased.

In a preferred embodiment of the inventive clipping tool assembly, the removal unit includes a securing mechanism, for securing the removal unit in the working position. The securing mechanism prevents the sliding carriage from unintentional movement into the release position. Thereby, a safe operation of the clipping machine is enabled.

Usually, the closure clip or remains thereof, that are stuck in the second guide portion formed by the sliding carriage, may fall out of the discharge opening on its own. In a further preferred embodiment, an ejection mechanism may be provided for ejecting a closure means or remains thereof out of the sliding carriage when in the release position. Thereby, it is ensured that the closure clip or remains thereof are securely removed out of the sliding carriage, and thus, out of the clipping tool assembly.

For executing an automated ejection operation, the ejection mechanism may include an ejection element that mechanically removes the closure clip from the sliding carriage, like a pusher element being reversibly pushed into the guide portion formed by the sliding carriage, and that causes the closure clip to fall through the discharge opening, out of the sliding carriage. Alternatively, an air nozzle may be directed towards the sliding carriage in the release position, such that a closure clip may be blown out of the sliding carriage and then falls though the discharge opening out of the clipping tool assembly.

Naturally, the closure clip sticking in the sliding carriage, may also manually be removed therefrom, e.g. by an operator using a respective removal tool.

In order to prevent the closure clip removed by the removal unit from the clipping tool assembly from entering other parts of the clipping machine, a guiding element is arranged on the second side surface for guiding a closure means or remains thereof, falling out of the discharge opening. In a simple design, the guide element is a flat sheet for preventing the closure clip from uncontrolled flipping into the clipping machine, by guiding it in a desired direction. Alternatively or additionally, a guide tube may be provided, into which said closure clip may fall, and through which it is securely guided out of the clipping machine. In each case, a collection container may be provided, into which said closure clips may be collected.

In the inventive clipping tool assembly, a magazine bar for temporarily storing and delivering closure means, like closure clips, to the clipping tool assembly may be mounted to the second side surface of the first frame element opposite to the sliding carriage when arranged in the working position. The closure clip next to be processed and delivered by the magazine bar, is directly fed through an opening in the second side surface of the first frame element, the clip window, into the second guide portion formed by the sliding carriage.

The inventive clipping tool assembly enables the safe application of a closure clip to a tubular packaging casing to be closed.

In order to apply two closure clips at the same time, a first closure clip for closing the rear end of a tubular packaging casing portion just filled, and a second closure clip for closing the front end of a tubular packaging casing to be filled next, the inventive clipping tool assembly comprises the clipping tool unit which includes a further first clipping tool and a further second clipping tool, for applying a further closure means, or closure clip, to said tubular or bag-shaped packaging casing, by linearly reversibly moving the further first clipping tool in a closing direction towards the further second clipping tool, and the support unit which has a second frame element arranged at least approximately parallel to the first frame element, the second frame element includes a guide arrangement for guiding the further first closing tool and the closure means, or closure clip, to be closed towards the further second closing tool, the guide arrangement forms a guide channel which extends in the closing direction.

In this embodiment of the inventive clipping tool assembly, the sliding carriage of the removal unit forms a portion of the guide arrangement of the second frame element. Thereby, a single sliding carriage may remove a closure clip or remains thereof from the clipping tool assembly.

Also in this embodiment, the guide channel extends through the second frame element and includes at least a first guide portion, a second guide portion and a third guide portion.

Furthermore, in this embodiment, the sliding carriage has a second end that forms the second guide portion of the guide arrangement of the second frame element.

Like the first frame element, also the second frame element has a first side surface and a second side surface, and comprises a guide recess provided in the first side surface of the second frame element, in which the second end of the sliding carriage is reversibly guided in the removal direction.

Further according to the present invention, there is provided a method for removing a closure means or remains thereof from a clipping tool assembly of a packaging machine, like a clipping machine, for closing tubular or bag-shaped packaging casings. The clipping tool assembly comprises a clipping tool unit including at least one first clipping tool and at least one second clipping tool, for applying at least one closure means to said tubular or bag-shaped packaging casing, by linearly reversibly moving the at least first clipping tool in a closing direction towards the at least second clipping tool, a support unit having at least a first frame element, the first frame element includes a guide arrangement for guiding the at least first closing tool and the closure means to be closed towards the at least second closing tool, the guide arrangement forms a guide channel which extends in the closing direction, and a removal unit for removing a closure means or remains thereof from the support unit of the clipping tool assembly. The method comprising the steps of actuating the removal unit for removing a closure means or remains thereof from the support unit of the clipping tool assembly.

In the case that the removal unit includes a securing mechanism, for securing the removal unit in the working position, the method further comprises the step of deactivating the securing mechanism prior activating the removal unit.

The inventive method thereby realises all advantage disclosed in conjunction with the inventive clipping tool assembly.

Further advantages and preferred embodiments of the present invention will be described in the following together with the drawings listed below. The expressions "*left*"*,* "*right*"*,* "*below*" and "*above*" used in the following description, are referred to the drawings in an alignment such that the reference numbers and the notation of the figures used can be read in normal orientation.

In the drawings:
- Fig. 1:: is a schematic view showing the principal design of a clipping machine for producing sausage-shaped products;
- Fig. 2:: is a schematic view showing the principal design of a clipping tool unit of a clipping machine for processing S-clips;
- Fig. 3:: is a perspective view to the clipping tool assembly according to the present invention;
- Fig. 4:: is a perspective view to the clipping tool assembly of Fig. 3; and
- Fig. 5:: is a plan view to a second side surface of a first frame element of the clipping tool assembly of Fig. 3.

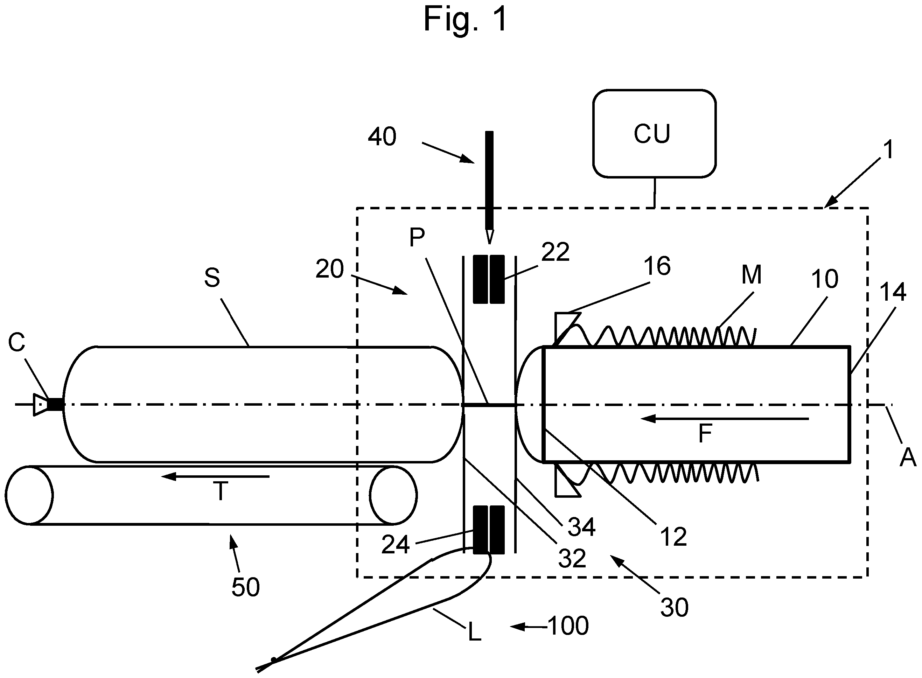

Fig. 1 shows the principal design of a clipping machine 1 for producing sausage-shaped products S, such as sausages, containing a flowable or granular filling material in a tubular packaging casing M. Clipping machine 1 has a filling tube 10, the central axis A of which extends in the longitudinal direction and, in the embodiment shown, horizontally. The longitudinal direction coincides with a filling direction F of a filling material.

Filling tube 10 has a discharge opening at its first end 12 for discharging a filling material fed or guided through filling tube 10 and a feeding opening at its second end 14 for feeding or introducing the filling material into filling tube 10 along filling direction F. The filling material is conveyed or fed from the feeding opening in filling direction F to the discharge opening of filling tube 10, for example by a feed pump of a filler being located right from system 1 shown in Fig. 1.

Moreover, a casing brake assembly 16 is arranged on and coaxially to filling tube 10 in the region of first end 12 of filling tube 10. Filling tube 10 is made of a suitable material, such as stainless steel. In addition to the horizontal orientation shown, filling tube 10 can also extend at an angle to the horizontal.

Tubular packaging casing M made of, for example, a thin sheet or film material is mounted or stored on filling tube 10 folded in an accordion like manner. Tubular packaging casing M is pulled-off during the manufacturing process of producing sausage-shaped products S, in particular by the feeding pressure, when the filling material is filled into tubular packaging casing M. Casing brake assembly 16 provides a preferably adjustable braking force which enables a controlled pulling-off of tubular packaging casing M from filling tube 10 during the filling process.

Clipping machine 1 further comprises gathering means 30 for gathering or shirring a section of the filled tubular packaging casing M and forming a plait-like portion or section P thereto. In addition, a clipping tool unit 20 is provided for closing a portion of tubular packaging casing M just filled by applying or attaching closure means, such as at least a first closure clip C, to plait-like portion P and preferably closing the front end of the next section of tubular packaging casing M to be filled subsequently by further closure means, such as a at least one further or second closure clip C. These components are all arranged downstream filling tube 10.

As can be inferred from Fig. 1, clipping tool unit 20 is positioned immediately downstream first end 12 of filling tube 10, and is aligned coaxially with filling tube 10, i.e. when closing tools of clipping tool unit 20 are reversibly moved together to close one or more closure means C, the axis of the plait-like portion P extends at least approximately coaxially to central axis A of filling tube 10.

Clipping tool unit 20 comprises first and second clipping or closing tools 22, 24 formed by at least one punch 22 and at least one die 24. It should be noted that punch 22 and die 24 can apply and close a single closure clip C for closing a just filled tubular packaging casing M, or can apply and close two or more closure clips C at the same time, at least a first closure clip C for closing the rear end of a just filled tubular packaging casing M for forming a complete sausage-shaped product S and at least a second closure clip C for closing the front end of a tubular packaging casing M to be subsequently filled.

If it is intended to store sausage-shaped products S on a rod-like element, such as a smoking rod, e.g. for further processing, such as cooking or smoking, a suspension element L, such as a suspension loop, may be provided and attached to one end of each sausage-shaped product S or to one end of a chain of sausage-shaped products S. A loop feeding device feeds suspension elements L to one of closing tools 22, 24 which attach suspension element L to a respective end of sausage-shaped product S by means of a closure clip C which closes said end of sausage-shaped product S.

For separating a sausage-shaped product S just produced from the remaining tubular packaging casing M stored or supported on filling tube 10, a cutting device 40 may be provided. Said cutting device 40 cuts the tubular packaging casing M, referred to filing direction F, upstream of closure clip C that closes the just filled portion of tubular packaging casing M. In case that two closure clips C have been applied to plait-like portion P by clipping tool assembly 20, cutting device 40 cuts plait-like portion P between said two closure clips C.

To remove a sausage-shaped product S just produced from clipping machine 1 in a transportation direction T, which at least substantially coincides with filling direction F, a discharge device 50 is arranged downstream clipping machine 1, which may be a belt conveyor comprising a conveyor belt and guide rollers.

For controlling clipping machine 1, a control unit CU is provided, to which the components of clipping machine 1 are connected. Moreover, control unit CU may also control peripheral devices, like discharge device 50 or a filler which feeds the filling material to clipping machine 1.

In general, two different kinds of clipping machines are known. Clipping machine which process so-called R-clips usually have one clipping lever arranged below the plat-like portion onto which a closure clip C has to be placed and closed. R-clips are arranged in a line, in which neighboring closure clips C are connected to each other at the free ends of their legs. The front most closure clip, already connected to the subsequent closure clip, is placed in a die supported by said closing lever, and is moved towards the plait-like portion from below.

Clipping machines, in which so-called S-clips are processed, have an approximately vertical plate or frame element with a guide channel in which a closing tool in the form of a punch is guided. S-clips are provided as a strand of clips arranged side by side such that the U-shaped side surfaces facing each other. Closure clips S of said strand of clips are connected to each other by, for example, an adhesive tape extending along the outside in the region of the clip bottom that connects the clip legs. In the case that closure clips S are made of plastic, closure clips S may be connected to each other by small bridges during the manufacturing process, like an injection moulding process. A closure clip S is fed through a clip window into the guide channel, and pushed by the punch towards the die arranged below the guide channel, where the plait-like portion of the filled tubular packaging casing is arranged, such that said closure clip S may be placed and closed thereon.

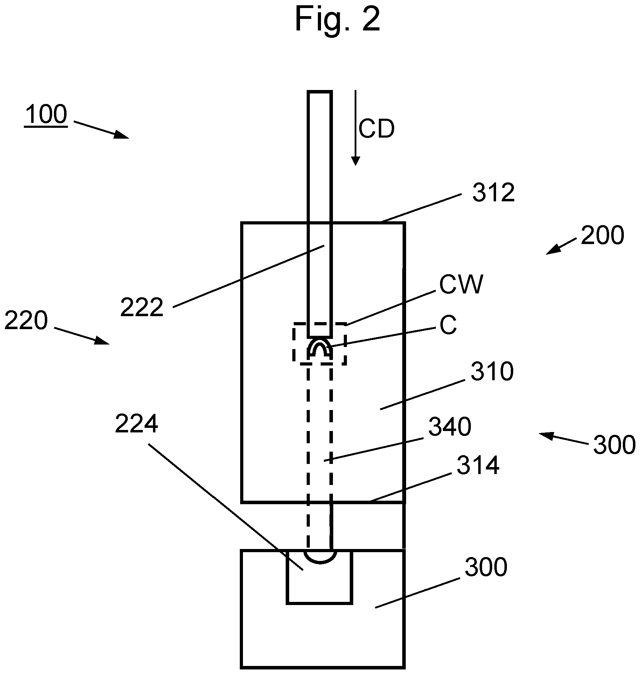

Fig. 2 is a schematic view to a clipping machine 100, in which so-called S-clips are processed, and in which the inventive clipping tool assembly is realized.

Clipping machine 100 has a clipping tool assembly 200 including a clipping tool unit 220 which has a first clipping tool 222 formed by a punch and a second clipping tool 224 in the form of a die. Clipping tool assembly 200 further has a support unit 300 including a first frame element 310, in which first clipping tool or punch 222 is guided in a guide channel 340. Second closing tool, or die 224 is supported by a first die support element 320 arranged below first frame element 310.

Guide channel 340 extends through first frame element 310 in a closing direction CD from upper end 312 to the lower end 314 of first frame element 310, when referred to the orientation shown in Fig. 2. Punch 222 is reversibly moved in closing direction CD for pushing a closure clip C arranged in guide channel 340 towards die 224. Thereby, closure clip C is placed on plait-like portion P of gathered tubular casing material M, which is positioned immediately above die 224, and is closed. An insertion opening or clip window CW is arranged in a central position of first frame element 310, and extends towards guide channel 240. Clip window CW is aligned with guide channel 340 such that a closure clip C may be fed through clip window CW into guide channel 340 below punch 222 when in its uppermost position.

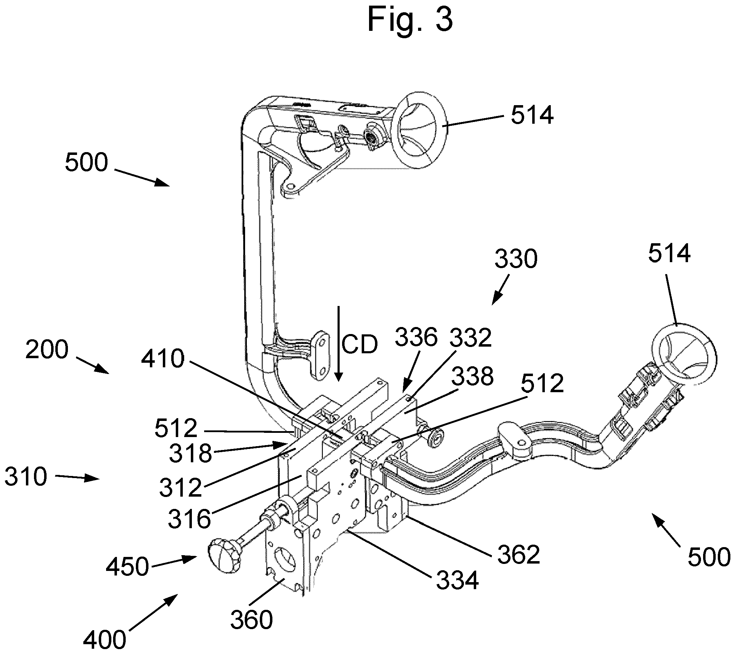

In Fig. 2, only a first frame element 310, a first die support element 320, one punch 222 and one die 224 are shown, by means of which one closure clip C may be placed and closed on a plait-like portion P of a gathered tubular packaging casing M. It has to be understood that, for closing two closure clips C at the same time, clipping machine 100 may include a second frame element and a second die support element arranged parallel to first frame element 310 and die support element 320, respectively, as it can be seen in Fig. 3, and which carry a second punch and a second die.

Fig. 3 is a perspective view to the front side of clipping tool assembly 200 according to the present invention. In Fig. 3, for clarity matter, clipping tools 222, 224 and die support elements 320 have been omitted.

Clipping tool assembly 200 according to Fig. 3 includes a first frame element 310 and a second frame element 330, with a guide arrangement including guide channels 340, which extend through first and second frame elements 310, 330 in closing direction CD.

First frame element 310 has an upper end 312, a lower end 314, a first side surface 316 and a second side surface 318. Second frame element 330 has an upper end 332, a lower end 334, a first side surface 336 and a second side surface 338. First and second frame elements 310, 330 are arranged parallel to each other, with a distance there between, and with first surfaces 316, 336 facing each other. First and second frame elements 310, 330 are fixed in their position relative to each other by a first mounting plate 360 and a second mounting plate 362, which are rectangular aligned to first and second frame elements 310, 330.

At each second side surface 318, 338 of first and second frame elements 310, 330, a magazine bar 500 is arranged, for feeding closure clips C to clipping tool assembly 200. Each magazine bar 500 has an inlet end 510 and an outlet end 512, and is fixed to first side surface 318, 338 by its out let end 512, such that said outlet end 512 matches with a clip window CW in first and second frame element 310, 330.

Clipping tool assembly 200 further includes a removal unit 400 for removing a closure clip C or remains thereof from support unit 300 of clipping tool assembly 200.

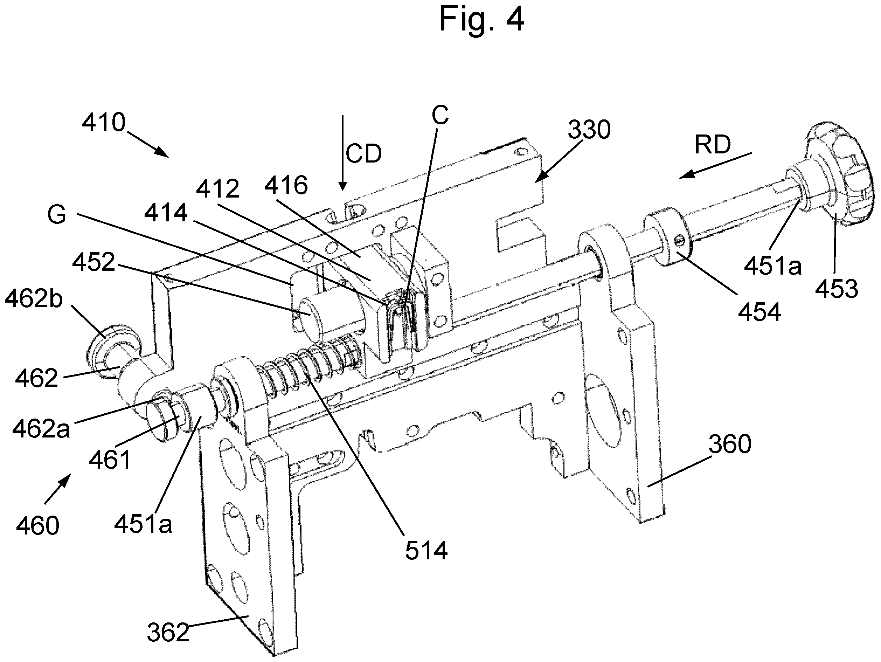

Removal unit 400, which will be explained in greater detail in conjunction with Fig. 4, includes a sliding carriage 410, which is arranged between first and second frame elements 310, 330, and an actuation assembly 450 for actuating removal unit 400, that is supported by first and second mounting plates 360, 362.

Fig. 4 is a perspective view to the rear side of clipping tool assembly 200 of Fig. 3. In Fig. 4, first frame element 310 has been omitted. It has to be noted that first and second frame elements 310, 330 are of approximately identical but mirror imaged design.

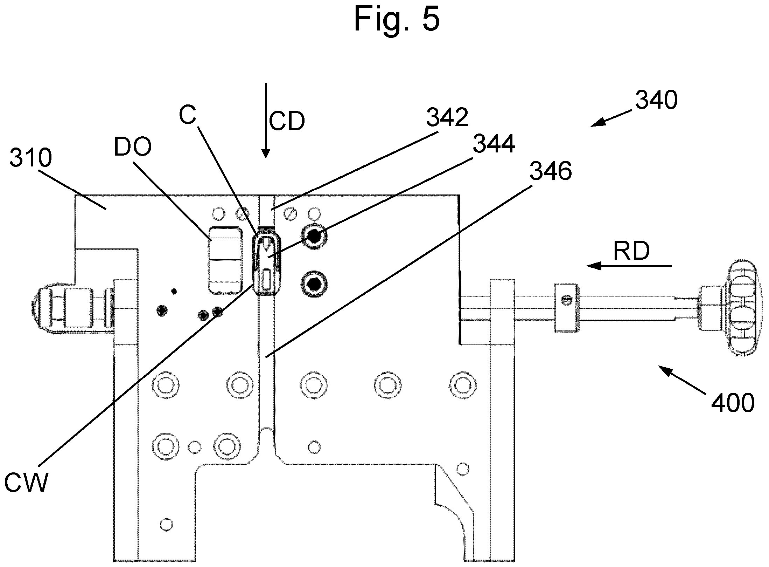

Fig. 5 is a plan view to second side surface 318 of first frame element 310, in which magazine bar 500 has been omitted. Guide channel 340 in first frame element 310 has a first guide portion 342, a second guide portion 344 and a third guide portion 346, which are subsequently arranged in closing direction CD. Second guide portion extends in the region of clip window CW. Laterally beside clip window CW, and in removal direction RD, a discharge opening DO is provided, that extends from second side surface 318 into first frame element 310.

As can be seen in Fig. 4, second frame element 330 is provided with a guide recess G in first side surface 366, and which has an approximately rectangular shape.

Guide recess G is arranged such that it terminates in guide channel 340, and covers clip window CW and discharge opening DO in second frame element 330. It has to be understood that first frame element 310 is provided with an identical guide recess G in first side surface 316.

As can further be seen in Fig. 4, sliding carriage 410 is of an approximately cuboid shape, and has a main body 412, a first end 414 and a second end 146. Second end 416 extends into guide recess G in second frame element 330, and first end 414 extends into guide recess G in first frame element 310, respectively (cf. Fig. 3).

The surfaces of first and second ends 414, 416 of sliding carriage 410 facing towards first and second frame elements 310, 330, form second guide portion 344 of guide channel 340, such that a closure clip C is guided there through in closing direction CD.

In Fig. 4, sliding carriage 410 is in a working position, in which first and second ends 414, 416 of sliding carriage are aligned with first and third guide portions 342, 346 of guide channels 340.

Sliding carriage 410 may reversibly shifted in removal direction RD from the working position into a release position, in which first and second ends 414, 416 of sliding carriage 410 are aligned with discharge openings RO in first and second frame elements 310, 330. During this movement, sliding carriage 410 is guided in guide recesses G in first and second frame elements 310, 330.

For reversibly moving sliding carriage 410 in removal direction RD, actuation assembly 450 of removal unit 400 includes a pusher bar 452 linearly shiftable supported by first and second mounting plates 360, 362, with sliding carriage 410 fixed to pusher bar 451. A linear guide bolt 452 is fixedly mounted between first and second frame elements 310, 330, above pusher bar 451. Guide bolt 452 extends in removal direction through a corresponding guide hole in sliding carriage 410, such that sliding carriage 410 is guided by guide bolt 452 during reversal movement in removal direction RD. Guide bolt 452 additionally prevents sliding carriage 410 from tilting and jamming in guide recess G.

Between mounting plate 362 and sliding carriage 410, an elastic element in the form of a coiled spring CS is arranged on pusher bar 451. Coiled spring CS urges sliding carriage into the working position. Thereby, damages to clipping tool assembly 200 may be omitted, caused by sliding carriage, 410, when accidentally left in the release position.

Pusher bar 451 has a first end 451a, being directed to the front side of clipping machine 100, and a second end 451b extending to the rear side of clipping machine 100.

At first end 451a of pusher bar 451, a knob 453 is arranged for operating removal unit 400. Between knob 453 and mounting plate 360, an adjustable stop ring 454 is mounted on pusher bar 451, for limiting the lengths of the movement path in removal direction RD.

In the region of second end 451b of pusher bar 541, a securing mechanism 460 is provided, which includes a circular groove 461 in second end 451b of pusher bar 451, and an engagement pin 462. Engagement pin 462 is attached to second frame element 330, and is shiftable in a direction vertically to removal direction RD. Engagement pin 462 has a first end 462a and a second end 462b, and is aligned such that first end 462a extends into circular groove 461, biased by an elastic element, like spring (not visible in Fig. 4). At second end 462b, a handle is mounted, for pulling engagement pin 461 out of engagement with circular groove 461, for enabling sliding carriage 410 to be shifted from the working position into the release position.

For producing sausage-shaped products S on clipping machine 100, tubular packaging casing M stored on filling tube 10 of clipping machine 100 and closed at its front end by a closure clip C, is filled with filling material that is fed through filling tube 10 into tubular packaging casing M in filling direction F. After a predetermined portion of filling material is fed into tubular packaging casing M, a plait-like portion P is formed to filled tubular packaging casing M by gathering means 30, and two closure clips C are applied to plait-like portion P and closed by clipping device 20, a first closure clip C for closing the just filled tubular packaging casing M for forming a complete sausage-shaped product S, and a second closure clip C for closing the front end of sausage-shaped product S subsequently to be produced. A suspension element L is provided by a respective feeding device and attached to one end of sausage-shaped product S by means of one of closure clips C. For severing just produced sausage-shaped product S from the remaining supply of tubular packaging casing M, cutting device 40 is activated so that plait-like portion P is cut between two closure clips C just set and the sausage-shaped product S just produced can be discharged from clipping machine 100 by discharge device 50. Suspension element L of sausage-shaped product S just produced is captured by a catching unit and guided towards a rod-like element, e.g. provided in a hanging line, to be suspended therefrom by suspension element L.

During the production process, or when the supply of closure clips C is emptied and new closure clips are refilled into magazine bars 500, remains of a defective closure clip or the first closure clip C or the last closure clip C in the strand of clips may stick in guide channel 340, in particular, in second guide portion 344 in the region of clip window CW, where closure clips C enter guide channel 340.

For removing a closure clip C sticking in guide channel 340, and particular in second guide portion 344, removal unit 400 is actuated. The operator, after clipping machine has been stopped, deactivates securing mechanism 460 by bringing engagement pin 462 out of engagement with circular groove 462 in second end 451b of pusher bar 451.

Then, the operator pushes pusher bar 451 by knob 453 in removal direction RD. Thereby, sliding carriage 410 is moved from the working position, in which first and second ends 414, 416 form second guide portion 344 of guide channel 340, into the release position. In the release position, first and second ends 414, 416 of sliding carriage 410 face discharge opening DO, against the force of coiled spring CS.

In this position, a closure clip C, or remains thereof, sticking in second guide portion 344, may fall out of second guide portion 344 through discharge opening DO by gravity, or may be removed by the operator, which uses a suitable tool.

Alternatively, the closure clip C may automatically be removed by a respective mechanism, like a nozzle guiding pressurized air into discharge opening DO, or a mechanical element brushing into discharge opening DO.

Thereafter, the operator unhands knob 453. Sliding carriage 410 is automatically pushed back into the working position by the force of coiled spring CS, and engagement pin of securing mechanism 460 engages circular groove 461 in second end of pusher bar 451, and secures sliding carriage 410 in the working position.

Removal unit 400 has been described as being manually activated. However, it is also possible that removal unit is automatically activated, e.g. by an actuation device, like a piston/cylinder arrangement or an electric motor, which may be controlled by control unit CU of clipping machine 100.

It has to be noted that removal unit 400 may be activated only if necessary, e.g. in case that a closure clip S sticks in guide channel 340. Alternatively, removal unit 400 may be activated in regular intervals, after a predefined number of clipping cycles have been executed. Furthermore, removal unit 400 may also be used for cleaning guide channel 340, and particularly its second guide portion 344, e.g. for removing dust or pieces of closure clips S caused by abrasion, in order to prevent closure clips from sticking in guide channel. The activation in regular intervals may manually be executed, or automatically, e.g. controlled by control unit CU.

## Claims

1. A clipping tool assembly (200) for closing at least one closure means (C), like a closure clip, in a packaging machine (100), like a clipping machine, for closing tubular or bag-shaped packaging casings (M), the clipping tool assembly (200) comprising:
a clipping tool unit (220) including at least one first clipping tool (222) and at least one second clipping tool (224), for applying at least one closure means (C) to a tubular or bag-shaped packaging casing (M), by linearly reversibly moving the at least first clipping tool (222) in a closing direction (CD) towards the at least second clipping tool (224);
a support unit (300) having at least a first frame element (310), the first frame element (310) includes a guide arrangement (340) for guiding the at least first closing tool (222) and a closure means (C) to be closed towards the at least second closing tool (224), the guide arrangement (340) forms a guide channel which extends in the closing direction (CD); and
a removal unit (400) configured to remove a closure means (C), or remains thereof, from the support unit (300) of the clipping tool assembly (200).

2. The clipping tool assembly (200) according to claim 1,
wherein the sliding carriage (410) is linearly reversibly movable in a removal direction (RD), between a working position and a release position.

3. The clipping tool assembly (200) according to claim 2,
wherein the removal unit (400) includes a sliding carriage (410) which is configured to form a portion of the guide arrangement (340) of the first frame element (310), when in the working position.

4. The clipping tool assembly (200) according to any of claims 1 to 3,
wherein the guide channel (340) extends through the first frame element (310) and includes at least a first guide portion (342), a second guide portion (344) and a third guide portion (346).

5. The clipping tool assembly (200) according to claim 4,
wherein the sliding carriage (410) has a first end (414) that forms the second guide portion (344) of the guide arrangement (340).

6. The clipping tool assembly (200) according to claim 5,
wherein the first frame element (310) has a first side surface (316) and a second side surface (318), and comprises a guide recess (G) provided in the first side surface (316) of the first frame element (310), in which the first end (414) of the sliding carriage (410) is reversibly guided in the removal direction (RD).

7. The clipping tool assembly (200) according to claim 6,
wherein a discharge opening (DO) is provided in the first frame element (310), which extends from the guide recess (G) to the second side surface (318) of the first frame element (310), and which coincides with the release position of the sliding carriage (410).

8. The clipping tool assembly (200) according to any of claims 1 to 7,
wherein the removal unit (400) includes an actuation assembly for manually moving the sliding carriage (410) from the working position into the release position; or
wherein the removal unit (400) includes an actuation assembly (450) for automatically moving the sliding carriage (410) from the working position into the release position.

9. The clipping tool assembly (200) according to any of claims 1 to 8,
wherein the removal unit (400) includes a securing mechanism (460), for securing the removal unit (400) in the working position.

10. The clipping tool assembly (200) according to any of claims 1 to 9, comprising:
the clipping tool unit (220) which includes a further first clipping tool (222) and a further second clipping tool (224), for applying a further closure means (C) to said tubular or bag-shaped packaging casing (M), by linearly reversibly moving the further first clipping tool (222) in a closing direction (CD) towards the further second clipping tool (224); and
the support unit (300) which has a second frame element (330) arranged at least approximately parallel to the first frame element (310), the second frame element includes (330) a guide arrangement (340) for guiding the further first closing tool (222) and the closure means (C) to be closed towards the further second closing tool (224), the guide arrangement (340) forms a guide channel which extends in the closing direction (CD).

11. The clipping tool assembly (200) according to claim 10,
wherein the sliding carriage (410) of the removal unit (400) forms a portion of the guide arrangement (340) of the second frame element (330).

12. The clipping tool assembly (200) according to claim 10 or 11,
wherein the guide channel (340) extends through the second frame element (330) and includes at least a first guide portion (342), a second guide portion (344) and a third guide portion (346).

13. The clipping tool assembly (200) according to any of claims 10 to 12,
wherein the sliding carriage (410) has a second end (416) that forms the second guide portion (344) of the guide arrangement (340) of the second frame element (330).

14. The clipping tool assembly (200) according to claim 13,
wherein the second frame element (330) has a first side surface (336) and a second side surface (338), and comprises a guide recess (G) provided in the first side surface (336) of the second frame element (330), in which the second end (416) of the sliding carriage (410) is reversibly guided in the removal direction (RD).

15. A method for removing a closure means (C), like a closure clip, or remains thereof, from a clipping tool assembly (200) of a packaging machine (100), like a clipping machine, for closing tubular or bag-shaped packaging casings (M), the clipping tool assembly (200) comprising:
- a clipping tool unit (220) including at least one first clipping tool (222) and at least one second clipping tool (224), for applying at least one closure means (C) to said tubular or bag-shaped packaging casing (M), by linearly reversibly moving the at least first clipping tool (222) in a closing direction (CD) towards the at least second clipping tool (224);
- a support unit (300) having at least a first frame element (310), the first frame element (310) includes a guide arrangement (340) for guiding the at least first closing tool (222) and a closure means (C) to be closed towards the at least second closing tool (224), the guide arrangement (340) forms a guide channel which extends in the closing direction (CD); and
- a removal unit (400) for removing a closure means (C) or remains thereof from the support unit (300) of the clipping tool assembly (200);
the method comprising the steps of:
- actuating the removal unit (400) for removing a closure means (C), or remains thereof, from the support unit (300) of the clipping tool assembly (200).
